Europäisches Patentamt

European Patent Office

Office européen des brevets

(11) Veröffentlichungsnummer : **0 163 935**
**B1**

(12) EUROPÄISCHE PATENTSCHRIFT

(45) Veröffentlichungstag der Patentschrift :
**19.08.87**

(51) Int. Cl.⁴ : **G 21 C 17/06**

(21) Anmeldenummer : **85105265.4**

(22) Anmeldetag : **30.04.85**

(54) Einrichtung zur Inspektion von Kernreaktorbrennstäben.

(30) Priorität : 26.05.84 DE 3419765

(43) Veröffentlichungstag der Anmeldung :
11.12.85 Patentblatt 85/50

(45) Bekanntmachung des Hinweises auf die Patenterteilung : 19.08.87 Patentblatt 87/34

(84) Benannte Vertragsstaaten :
AT BE CH DE FR IT LI SE

(56) Entgegenhaltungen :
FR-A- 2 298 859
FR-A- 2 395 571
BRITISH NUCLEAR ENERGY SOCIETY, 1981, London,
Post-irradiation examination, Proceedings of the
conference, Grange-over-Sands, 13.-16. Mai 1980,
Seiten 173-179; L.V. CORSETTI et al.: "The combustion engineering comprehensive fuel inspection
stand"

(73) Patentinhaber : BROWN BOVERI REAKTOR GmbH
Dudenstrasse 44
D-6800 Mannheim 1 (DE)

(72) Erfinder : Scharpenberg, Rainer, Ing. grad
Im Krappenklingen 32
D-6948 Waldmichelbach (DE)

(74) Vertreter : Kempe, Wolfgang, Dr. et al
c/o BROWN, BOVERI & CIE AG ZPT Postfach 351
D-6800 Mannheim 31 (DE)

## Beschreibung

Die Erfindung betrifft eine Einrichtung zur Inspektion von Kernreaktorbrennstäben, die als Brennstabbündel in einem Brennelement zusammengefaßt sind, mit einem in mehreren Ebenen verfahrbaren, in die Räume zwischen den Brennstäben einfahrbaren Geräteträger und mit einem aus vier Säulen sowie einer Grund- und einer Abdeckplatte gebildeten Gestell zur Aufnahme des Brennelements und des Geräteträgers.

Eine derartige Einrichtung ist aus der DE-A-25 58 631 bekannt. Neben den vier Säulen, die zusammen mit einer Grund- und Abdeckplatte ein Gestell zur Aufnahme eines Brennelements bilden, sind nach dieser DE-A noch zwei zwischen der Grund- und Abdeckplatte erstreckte U-Schienen vorgesehen. Sie dienen als Führungsschienen für einen in vertikaler Richtung verfahrbaren Rahmen, der seinerseits aus zwei gegenüberliegenden U-Schienen und aus dieselben verbindenden Streben besteht. In diesen U-Schienen ist ein entlang derselben bewegbarer Schlitten geführt, der ebenso aufgebaut ist wie der vorgenannte Rahmen. Letztendlich ist in den U-Schienen dieses Schlittens ein weiterer Schlitten geführt, an dem ein Geräteträger zum Einführen von Spiegeln in die Räume zwischen den Brennstäben befestigt ist.

Muß eine derartig aufwendige und komplizierte Einrichtung für die in der Regel unter einer Wasserabdeckung stattfindende Prüfung von Brennelementen eingesetzt werden, so bedeutet dies eine erhöhte Reparaturanfälligkeit. Derartige Einrichtungen werden im allgemeinen nach ihrem Einsatz dekontaminiert und zu einer anderen kerntechnischen Anlage transportiert. Die schwere und sperrige Einrichtung ist daher für den Transport ein großes Hindernis. Aus den gleichen Gründen ist die Durchführung der Dekontamination mit Schwierigkeiten verbunden.

Es ist daher die Aufgabe der Erfindung eine Einrichtung der eingangs genannten Art anzugeben, die einfacher aufgebaut ist und dadurch leichter, weniger reparaturanfällig sowie beim Transport und bei der Dekontamination besser zu handhaben ist.

Gelöst wird diese Aufgabe erfindungsgemäß dadurch, daß die Säulen als Spindeltrieb ausgebildet sind, daß in Quererstreckung zu den Säulen zwei parallel zueinander verlaufende Spindeltriebe an den in den Säulen integrierten Spindeltrieben befestigt sind und daß die quererstreckten Spindeltrieben einen weiteren mit dem Geräteträger bestückten Spindeltrieb gemeinsam tragen.

Abgesehen von der Grund- und Abdeckplatte ist die Einrichtung somit ausschließlich aus Spindeltrieben zusammengesetzt. Sie übernehmen neben ihrer Bewegungsfunktion noch eine Tragefunktion und tragen somit erheblich zur Gewichtsersparnis und zur Vereinfachung der Einrichtung bei.

Gemäß einer bevorzugten Ausgestaltung ist die Spindelmutter jedes Spindeltriebes als Tragplatte ausgebildet, die zur Befestigung eines anderen Spindeltriebes oder des Geräteträgers dient.

Damit wird auf einfache Weise die unmittelbare und bewegungsübertragende Verbindung zwischen den Spindeltrieben erzielt.

Vorzugsweise ist die Abdeckplatte zwischen den Stirnseiten der die Säulen bildenden Spindeltriebe und den Flanschen des Elektromotores eingespannt.

Anhand eines Ausführungsbeispiels und der schematischen Zeichnungen nach Fig. 1 bis 3 wird eine Einrichtung nach der Erfindung beschrieben.

Dabei zeigen die

Figur 1 einen Spindeltrieb,

Figur 2 eine perspektivische Gesamtdarstellung einer Einrichtung und

Figur 3 eine Draufsicht einer anders ausgebildeten Einrichtung unter Weglassung der Abdeckplatte.

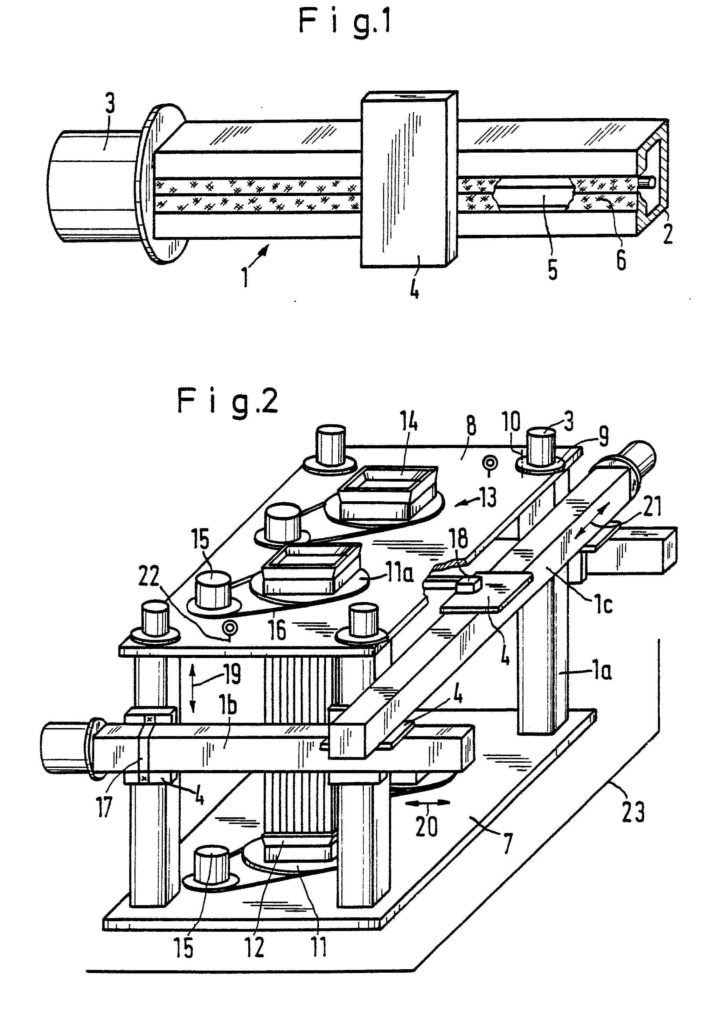

Die Fig 1 zeigt mit einem Spindeltrieb 1 das Grundbauelement der Einrichtung. Wie an der Querschnittsfläche zu ersehen ist besteht der Spindeltrieb aus einem Hohlprofil, entlang dessen Längsachse sich eine Spindel 2 erstreckt. Durch einen Elektromotor 3 wird die Spindel 2 in Drehung versetzt, so daß eine nicht dargestellte Spindelmutter eine mit ihr verbundene Tragplatte 4 entlang eines in einer Seitenfläche des Spindeltriebes eingebrachten Schlitzes 5 bewegt. Der Schlitz ist durch eine Dichtlippenkonstruktion 6 auch während der Fahrbewegung der Tragplatte 4 abgedichtet, da ein nicht dargestelltes Verbindungsstück zwischen Spindelmutter und Tragplatte 4 von der Dichtlippenkonstruktion 6 umschlossen ist. Der Spindeltrieb ist also allseits geschlossen, so daß sein Einsatz in einer Wasserumgebung möglich ist.

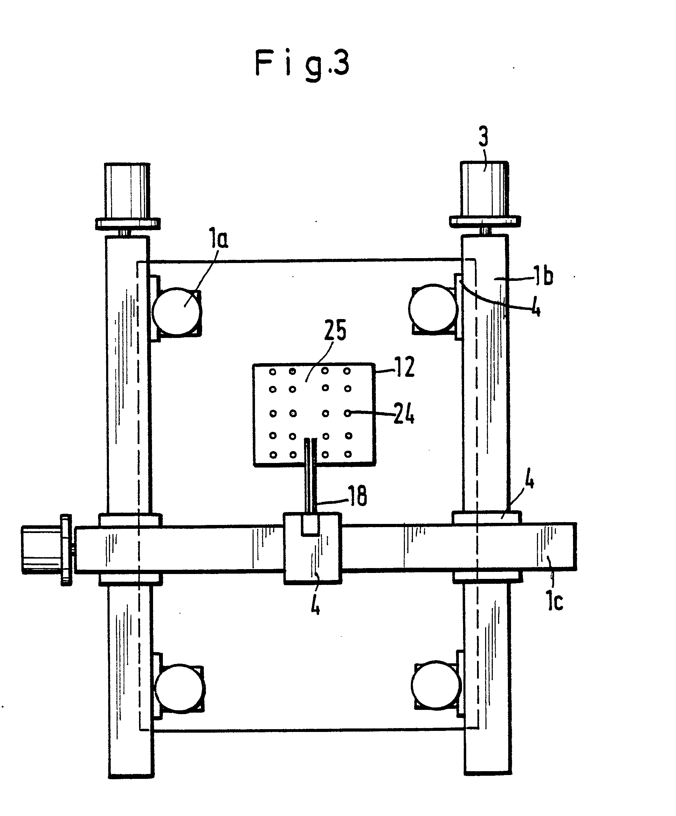

Die Kombination dieser an sich bekannten Spindeltriebe untereinander führt zu einer erfindungsgemäßen Einrichtung nach Fig. 2 und 3. Gemäß Fig. 2 sind auf einer Grundplatte 7 vier vertikal erstreckte Spindeltriebe 1a befestigt. Auf den nach oben gerichteten Stirnseiten dieser Spindeltriebe 1a ruht eine parallel zur Grundplatte erstreckte Abdeckplatte 8. Auf der Oberfläche der Abdeckplatte sind Elektromotore 3 angeordnet deren mit der jeweiligen Spindel 2 eines Spindeltriebes verbundene Antriebselemente die Abdeckplatte durchsetzen. Die Flansche 9 der Elektromotore 3 dienen dabei der Festlegung der Abdeckplatte 8 relativ zu den vertikal erstreckten Spindeltrieben 1a. Dabei finden Schrauben 10 Verwendung, die den Flansch durchsetzen und stirnseitig in den jeweiligen Spindeltriebe 1a eingreifen. Auf der Grundplatte 7 sind zwei Drehteller 11 angeordnet die zur Aufnahme je eines Brennelementes 12 dienen. Diesen Drehtellern gegenüberliegend ist die Abdeckplatte mit Öffnungen 13 zur Aufnahme eines mit einer Zentrieraufnahme 14 für das jeweilige

Brennelement ausgestatteten Drehtellers 11a versehen. Jedem Drehteller 11, 11a ist ein Antriebselement 15 zugeordnet, das über einen Keilriemen 16 den Drehteller mit dem Brennelement in Drehung versetzen kann. Die einem Brennelement zugeordneten Antriebselemente sind synchron geschaltet und die Zentrieraufnahme 14 dient als Mitnehmer für das Brennelement. An den Tragplatten 4 von jeweils zwei vertikal erstreckten Spindeltrieben 1a sind über Haltebügel 17 quererstreckte Spindeltriebe 1b befestigt. Diese gegenüberliegend und auf gleicher Höhe angeordneten Spindeltriebe 1b tragen über ihre Trageplatten 4 gemeinsam einen weiteren Spindeltrieb 1c auf dessen Trageplatte 4 ein Geräteträger 18 befestigt ist. Die den vertikal erstreckten Spindeltrieben 1a zugeordneten Elektromotore 3 sind elektrisch gleichgeschaltet, so daß eine gleichförmige, präzise Bewegung der Spindeltriebe 1b in Pfeilrichtung 19 erfolgt. Das gleiche trifft für die den quererstreckten Spindeltrieben 1b zugeordneten Elektromotoren zu, so daß auch der Spindeltrieb 1c präzise und gleichförmig in Pfeilrichtung 20 bewegt wird. Für die Bewegung des Geräteträgers 18 in Pfeilrichtung 21 ist der Spindeltrieb 1c zuständig.

Die Inspektion eines Brennelementes läuft wie folgt ab : Mit Hilfe eines nichtdargestellen Hebezeuges, das an den Ösen 22 angeschlagen ist, wird die Einrichtung in einem wassergefüllten Brennelementlagerbecken 23 abgestellt. Die Einrichtung wird mit einem Brennelement beschickt, an dem dann sofort die Inspektion beginnt. Während der Inspektionsarbeiten wird die Einrichtung mit einem zweiten Brennelement beschickt. Das gleichzeitige Beschicken und Prüfen bringt eine erhebliche Zeitersparnis. Mit Hilfe des einem Brennelement zugeordneten Drehtellerantriebs wird das Brennelement in eine solche Position gebracht, daß der Geräteträger in die Räume zwischen den Brennstäben einfahren kann. Die Elektromotoren 3 sind über nicht dargestellte Leitungsverbindungen und über eine ebenfalls nicht dargestellte außerhalb des Brennelementlagerbeckens angeordnete Bedienungseinheit fernbedient derart bewegbar, daß der Geräteträger in die gewünschte Prüfpositon gelangt. In der Regel ist ein Brennelement in seiner Längserstrekkung auf mehreren Ebenen mit dem Geräteträger zu befahren, der mit verschiedenartigen Reinigungs-, Inspektions- oder Bearbeitungsgeräten bestückt sein kann. Soll der Geräteträger von verschiedenen Seiten in die Räume zwischen den Brennstäben einfahren, wird das Brennelement im 90°-Takt mit Hilfe des Drehtellers bewegt. Der den Geräteträger 18 aufnehmende Spindeltrieb 1c ist nur außerhalb des durch die vertikal erstreckten Spindeltriebe 1a begrenzten Raumes bewegbar. Der von ihm durch die quererstreckten Spindeltriebe 1b zurücklegbare Weg in Pfeilrichtung 20 ist mindestens so groß wie ein Brennelement breit ist.

Die Fig. 3 zeigt in einer Ansicht von oben bei abgenommener Deckplatte eine im wesentlichen gleich aufgebaute Einrichtung. Sie ist lediglich nur für ein Brennelement ausgelegt und der den Geräteträger 18 aufnehmende Spindeltrieb 1c bewegt sich innerhalb des durch die Spindeltriebe 1a begrenzten Raumes. In dieser Fig. 3 sind außerdem die Brennstäbe 24 und die Zwischenräume 25, in welche der Geräteträger einfährt, zu erkennen.

## Patentansprüche

1. Einrichtung zur Inspektion von Kernreaktorbrennstäben, die als Brennstabbündel in einem Brennelement zusammengefaßt sind, mit einem in mehreren Ebenen verfahrbaren, in die Räume zwischen den Brennstäben einfahrbaren Geräteträger und mit einem aus vier Säulen sowie einer Grund- und einer Abdeckplatte gebildeten Gestell zur Aufnahme des Brennelements und des Geräteträgers, dadurch gekennzeichnet, daß die Säulen als Spindeltrieb (1a) ausgebildet sind, daß in Quererstreckung zu den Säulen zwei parallel zueinander verlaufende Spindeltriebe (1b) an den in den Säulen integrierten Spindeltrieben (1a) befestigt sind und daß die quererstreckten Spindeltriebe (1b) einen weiteren mit dem Geräteträger (18) bestückten Spindeltrieb (1c) gemeinsam tragen.

2. Einrichtung nach Anspruch 1 dadurch gekennzeichnet, daß eine Spindelmutter jedes Spindeltriebes (1a, 1b, 1c) als Trageplatte (4) ausgebildet ist, die zur Befestigung eines anderen Spindeltriebes oder des Geräteträgers (18) dient.

3. Einrichtung nach Anspruch 1 oder 2, dadurch gekennzeichnet, daß die Abdeckplatte (8) zwischen den Stirnseiten der die Säulen bildenden Spindeltriebe (1a) und den Flanschen (9) eines Elektromotores (3) eingespannt ist.

## Claims

1. Equipment for inspecting nuclear reactor fuel rods which are assembled as a fuel rod cluster in a fuel assembly, comprising an instrument carrier which can be moved in several planes and can be inserted into the spaces between the fuel rods and a frame, formed from four pillars and also a baseplate and a coverplate, for receiving the fuel assembly and the instrument carrier, characterized in that the pillars are constructed as a worm drive (1a), in that, extended transversely to the pillars, two worm drives (1b) extended parallel to each other are mounted on the worm drives (1a) built into the columns, and in that the transversely extending worm drives (1b) jointly support a further worm drive (1c) on which the instrument carrier (18) is mounted.

2. Equipment according to Claim 1, characterized in that one spindle nut of each worm drive (1a, 1b, 1c) is constructed as a carrier plate (4) which is used to mount another worm drive or the instrument carrier (18).

3. Equipment according to Claim 1 or 2, characterized in that the coverplate (8) is clamped between the end faces of the worm drives (1a) forming the pillars and the flanges (9) of an electric motor (3).

## Revendications

1. Dispositif d'inspection de barres combustibles de réacteurs nucléaires, rassemblées en faisceau de barres combustibles dans un élément combustible, ce dispositif comportant un support d'appareil mobile dans plusieurs plans, engageable dans les espaces entre les barres combustibles, et un châssis constitué par quatre colonnes et par une plaque de base et une plaque de recouvrement, pour recevoir l'élément combustible et le support, caractérisé en ce que les colonnes sont réalisées sous forme d'entraînements par vis sans fin (1a), en ce que deux entraînements par vis sans fin (1b) mutuellement parallèles, transversaux aux colonnes, sont fixés aux entraînements par vis sans fin intégrés dans les colonnes, et en ce que les entraînements par vis sans fin dirigés transversalement portent conjointement un autre entraînement par vis sans fin (1c) muni du support d'appareil (18).

2. Dispositif selon revendication 1, caractérisé en ce qu'un écrou de chaque entraînement par vis sans fin (1a, 1b, 1c) est réalisé en tant que plaque-support (4) servant à la fixation d'un autre entraînement par vis sans fin ou du support d'appareil (18).

3. Dispositif selon revendication 1 ou 2, caractérisé en ce que la plaque de recouvrement (8) est enserrée entre les brides (9) de moteurs électriques (3) et les faces extrêmes des entraînements par vis sans fin (1a) constituant les colonnes.

# F i g.1

# F i g.2

# F i g.3